# EUROPEAN PATENT APPLICATION

(11) **EP 4 498 240 A1**
(43) Date of publication of application: **29.01.2025**
(21) Application number: 23849355.5
(22) Date of filing: 31.07.2023
(51) Int. Cl.: G06F 9/451, G06F 3/0481, G06F 3/0484

(54) **INFORMATION DISPLAY METHOD AND APPARATUS, AND ELECTRONIC DEVICE AND STORAGE MEDIUM**

(30) Priority: 02.08.2022 CN 202210923074
(71) Applicant: Beijing Zitiao Network Technology Co., Ltd., Beijing 100190 (CN)
(72) Inventor: LIU, Fujia, Beijing 100028 (CN)
(74) Representative: Dentons UK and Middle East LLP
(86) International application number: PCT/CN2023/110237
(87) International publication number: WO 2024/027648

(57) **Abstract**

An information display method and apparatus, and an electronic device and a storage medium. The method comprises: displaying first associated content information of first media content in an information display area of a media content display interface, wherein the first associated content information comprises character content information (S101); and in response to a target triggering which acts on the media content display interface, adjusting the attribute of a target object, wherein the target object comprises the first associated content information (S 102).

## Description

### CROSS-REFERENCE TO RELATED APPLICATION(S)

The present application claims the right of priority to Chinese patent application No. 202210923074.7, filed with the Chinese Patent Office on August 2, 2022, the disclosure of which is incorporated herein by reference in its entirety.

### FIELD

The disclosure relates to the technical field of computers, in particular to a method and apparatus for displaying information, an electronic device, and a storage medium.

### BACKGROUND

Users can watch videos and view associated content information of a media content within applications. However, the associated content information is displayed in a relatively fixed way that does not satisfy the demand of the users.

### SUMMARY

The disclosure provides a method and apparatus for displaying information, an electronic device and a storage medium, to achieve rapid adjustment for attributes of associated content information.

Examples of the disclosure provide a method for displaying information. The method includes:
displaying first associated content information of a first media content in an information display area of a media content display interface, where the first associated content information includes character content information; and
adjusting an attribute of a target object in response to a target triggering acting within the media content display interface, where the target object includes the first associated content information.

The examples of the disclosure further provide an apparatus for displaying information. The apparatus includes:
a first information displaying module configured to display first associated content information of a first media content in an information display area of a media content display interface, where the first associated content information includes character content information; and
an attribute adjusting module configured to adjust an attribute of a target object in response to a target triggering acting within the media content display interface, where the target object includes the first associated content information.

The examples of the disclosure further provide an electronic device. The electronic device includes:
one or more processors; and
a memory configured to store one or more programs, where
when executed by the one or more processors, the one or more programs cause the one or more processors to implement the method for displaying information according to the examples of the disclosure.

The examples of the disclosure further provide a computer-readable storage medium, storing a computer program. The computer program implements the method for displaying information according to the examples of the disclosure when executed by a processor.

### BRIEF DESCRIPTION OF THE DRAWINGS

FIG. 1 is a schematic flowchart of a method for displaying information according to an example of the disclosure;
FIG. 2 is a schematic diagram of displaying first associated content information according to an example of the disclosure;
FIG. 3 is a schematic diagram of displaying a preset mode control according to an example of the disclosure;
FIG. 4 is a schematic diagram of displaying detail information of a preset display mode according to an example of the disclosure;
FIG. 5 is a schematic flowchart of another method for displaying information according to an example of the disclosure;
FIG. 6 is another schematic diagram of displaying first associated content information according to an example of the disclosure;
FIG. 7 is a schematic diagram of displaying an adjustment control according to an example of the disclosure;
FIG. 8 is a schematic diagram of displaying an adjustment panel according to an example of the disclosure;
FIG. 9 is yet another schematic diagram of displaying first associated content information according to an example of the disclosure;
FIG. 10 is still another schematic diagram of displaying first associated content information according to an example of the disclosure;
FIG. 11 is a structural block diagram of an apparatus for displaying information according to an example of the disclosure; and
FIG. 12 is a schematic structural diagram of an electronic device according to an example of the disclosure.

### DETAILED DESCRIPTION OF EMBODIMENTS

Examples of the disclosure are described below with reference to the drawings. Although some examples of the disclosure are shown in the drawings, the disclosure may be embodied in various forms and should not be construed as being limited to the examples set forth herein. On the contrary, these examples are provided, such that the disclosure will be understood. The drawings and examples of the disclosure are for illustrative purposes merely and are not intended to limit the scope of protection of the disclosure.

Various steps recited in the method embodiments of the disclosure can be performed in different orders and/or in parallel. Furthermore, the method embodiments can include additional steps and/or omit to execute the illustrated steps. The scope of the disclosure is not limited in this respect.

As used herein, the term "comprise" or "include" and their variations are open-ended, that is, "comprise but not limited to" and "include but not limited to". The term "based on" is "based at least in part on". The term "an example" means "at least one example". The term "another example" means "at least one further example". The term "some examples" means "at least some examples". Definitions for other terms are given in the description below.

Concepts such as "first" and "second" mentioned in the disclosure are merely used to distinguish different apparatuses, modules or units, and are not used to limit the order of functions executed by these apparatuses, modules or units or their interdependence.

The modification with "a", "an" or "a plurality of' in the disclosure is intended to be illustrative rather than limitative, and should be understood as "one or more" unless the context dictates otherwise.

The names of messages or information exchanged between a plurality of apparatuses in the embodiments of the disclosure are merely for illustrative purposes, and are not intended to limit the scope of these messages or information.

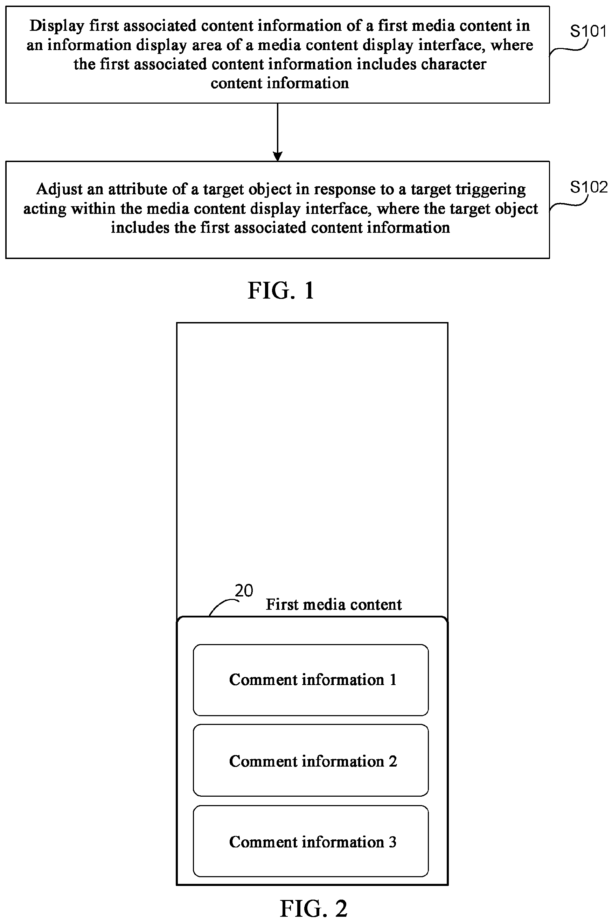

FIG. 1 is a schematic flowchart of a method for displaying information according to an example of the disclosure. The method may be executed by an apparatus for displaying information. The apparatus may be implemented by software and/or hardware, and may be configured in an electronic device, for example, may be configured in a mobile phone or tablet computer. The method for displaying information provided in the example of the disclosure is applicable to a scene where an attribute of associated content information of a media content is adjusted in a media content display interface. For example, the method is applicable to a scene where an attribute of comment information of a media content is adjusted in a media content display interface. As shown in FIG. 1, the method for displaying information provided in the example may include the following steps.

S101. Display first associated content information of a first media content in an information display area of a media content display interface, where the first associated content information includes character content information.

The media content display interface may be a interface for playing the media content, such as a video playing interface. The information display area may be an area for displaying the associated content information of the first media content, that is, a display area of the associated content information of the first media content. The first media content may be a media content currently played in the media content display interface. The media content may be, for example, a graphic content or a video content, and the type of the first media content is not limited in the example. The first associated content information may be understood as content information associated with the first media content, such as comment information of the first media content and/or a text title of the first media content, etc., may include character content information, and may further include picture associated content information and/or emoticon associated content information.

With the first associated content information being comment information of the first media content as an example, as shown in FIG. 2 (the first associated content information is the comment information of the first media content in the figure), the currently displayed comment information of the first media content may be displayed in the information display area 20 (for example, comment display area) of the media content display interface. For example, the first media content may be displayed in the media content display interface. When a triggering of viewing the comment information of the first media content by a user is received, the comment information of the target media content is displayed in the information display area 20 of the media content display interface. For example, a comment panel of the first media content is displayed in the information display area of the media content display interface, and the comment information of the first media content is displayed in the comment panel.

S102. Adjust an attribute of a target object in response to a target triggering acting within the media content display interface, where the target object includes the first associated content information.

The target triggering may be an operation configured to instruct adjustment of the attribute of the target object, such as a triggering applied to a preset control, or a preset gesture operation. The preset gesture operation may be, for example, a double-tap operation, a slide operation, or a multi-finger triggering (for example, multi-finger zoom in, multi-finger pinch). The target object may be understood as an object targeted by the target triggering, and may include the first associated content information. Optionally, the target object may further include the information display area. The attribute of the target object may include a display attribute of the target object, such as a size (for example, font size, etc.) of the target object, a color of the target object and/or a display style (for example, font, format, etc.) of the target object.

Illustratively, when the target triggering acting on the media content display interface is received, the attribute of the target object may be adjusted. For example, the attribute of the information display area and/or the first associated content information displayed in the information display area.

When the attribute of the target object is adjusted, the size of the target object may be adjusted, for example, a display size of the first associated content information and/or an area size of the information display area are/is adjusted. The color of the target object may also be adjusted, for example, a color of the first associated content information, and/or a background color and/or a border color of the information display area are/is adjusted. In this case, optionally, the step of adjusting an attribute of a target object includes: adjust the color of the target object. The following description takes adjusting the size of the target object as an example.

In the example, when the associated content information of the media content is displayed, the attribute of the associated content information and/or the information display area where the associated content information are/is located may be adjusted according to the target triggering of the user, such that the user can conveniently and quickly adjust the attribute of the associated content information/information display area when viewing the associated content information. Operation required for adjusting the attribute of the associated content information/information display area is simplified, and user experience can be improved.

In an embodiment, the method for displaying information provided in the example may further include: display a preset mode control in response to end of the target triggering. The preset mode control is configured to trigger setting of current application software to a preset display mode. Different display modes correspond to different display attributes of information to be displayed. The information to be displayed includes the first associated content information.

In the above embodiment, the preset mode control corresponding to the preset display mode may be displayed in response to the target triggering. Therefore, the user can set a display mode of the current application software to the preset display mode by triggering the preset mode control.

The preset mode control may be a control corresponding to the preset display mode. The preset mode control may be configured to trigger switching of the display mode of the current application software to the preset display mode. One or more preset mode controls may be provided. In different display modes, the information to be displayed in the current application software may have different display attributes. Optionally, the display attributes may include at least one of a display size, a display color, and a display style. In some examples, different display modes correspond to different display sizes of the information to be displayed. For example, the information to be displayed has different font sizes under different display modes. In some other examples, the different display modes correspond to different color modes of the information to be displayed, such as a color weakness mode. The information to be displayed includes the first associated content information. For example, a color of the information to be displayed may change along with the target triggering. For example, the target triggering is a slide operation, and when the information to be displayed changes to a color expected by the user, the user ends the target triggering, and the information to be displayed remains the color at the end of the target triggering.

The information to be displayed may be understood as information to be displayed in the current application software, and may include the associated content information of the media content displayed in the current application software. For example, the information to be displayed may further include a conversation message displayed in a conversation interface, or friend information displayed in a friend list interface. Different types of information to be displayed may have the same display attributes in the same display mode or not.

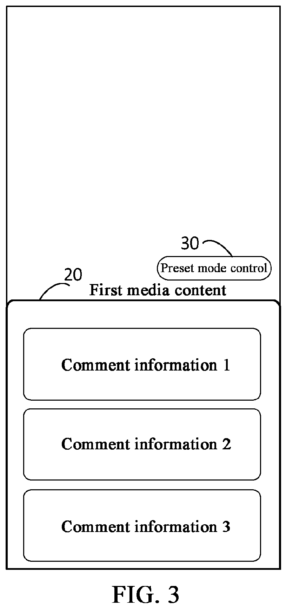

Illustratively, in response to end of the target triggering, at least one preset mode control 30 corresponding to the display mode may be displayed in the media content display interface, as shown in FIG. 3 (in the figure, the first associated content information is comment information of the first media content).

Therefore, when the user is to switch the display mode of the current application software, a preset mode control corresponding to a preset display mode to which the user is to switch can be triggered.

When detecting that the user triggers a preset mode control, a current application program may switch its display mode to a preset display mode corresponding to a preset mode control triggered by the user.

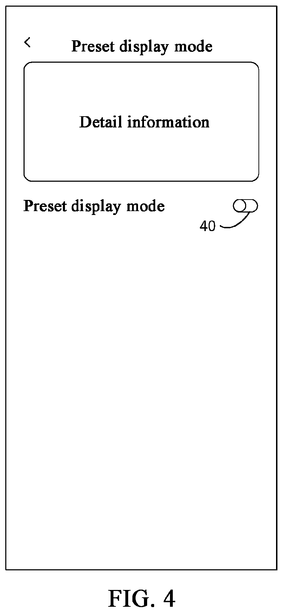

Moreover, when detecting that the user triggers another preset mode control, the current application program may also display detailed information of the preset display mode corresponding to the preset mode control triggered by the user and a use control 40 of the preset display mode, as shown in FIG. 4. Therefore, the user can view the detailed information of the preset display mode and trigger the use control 40 of the preset display mode when the user is to switch to the preset display mode. When detecting that the current user triggers the use control 40 of the preset display mode, the current application program may switch its display mode to the preset display mode.

In this example, when switching the display mode, the current application software may need to be restarted or not. In a case that the current application software needs to be restarted, when the current application software switches its display mode to the preset display mode, for example, when the user triggers a preset mode control or a use control corresponding to the preset display mode, the current application software may prompt the user that the current application software needs to be restarted, and restart when receiving a triggering confirming restart from the user, so as to switch its own display mode to the preset display mode. In a case that the current application software does not need to be restarted, the current application software may directly switch its display mode to the preset display mode, and display information according to the preset mode, for example, switch the display size of the first associated content information displayed in the information display area to a preset display size of the associated content information set in the preset display mode, and/or adjust the area size of the information display area to the preset display size of the information display area set in the preset display mode.

In the above embodiment, the preset mode control may be displayed each time the target triggering is received regardless of the number of times of displaying the preset mode control. The number of times of displaying the preset mode control may also be considered, and the preset mode control is displayed only when the user frequently adjusts the attribute of the target object through the target triggering, such that interference caused by displaying the preset mode control to the user is avoided. In this case, optionally, the step of displaying the preset mode control includes: display the preset mode control when a number of times of the target triggering within a preset period reaches a preset number of times. The preset period and the preset number of times may be set according to needs. For example, the preset period may be set to one day, one week or one month, and the preset number of times may be set to 10 times, 30 times or 50 times, which are not limited in the example. The display preset mode control may be used for improving user experience. Determination of the number of times of the target triggering is obtained with sufficient authorization from the user.

The method for displaying information provided in the example includes: display first associated content information of a first media content in an information display area of a media content display interface, where the first associated content information includes character content information; and adjust an attribute of a target object in response to a target triggering acting within the media content display interface, where the target object includes the first associated content information. In the example, by using the above technical solution, when the associated content information of the media content is displayed, the attribute of the associated content information is adjusted according to the target triggering of the user, such that the user can conveniently and quickly adjust the attribute of the associated content information when viewing the associated content information. Operation required for adjusting the attribute of the associated content information is simplified, and user experience is improved.

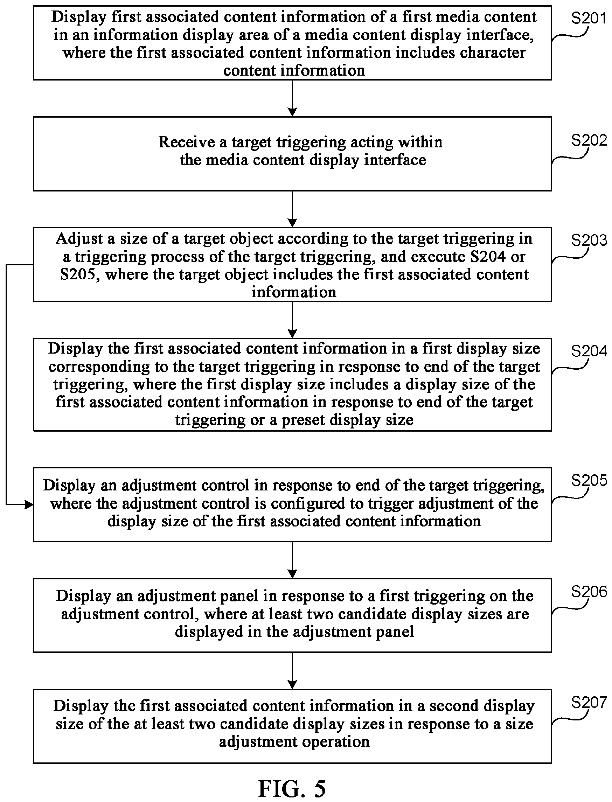

FIG. 5 is a schematic flowchart of another method for displaying associated content information according to an example of the disclosure. The solutions in the example may be combined with one or more alternatives in the examples described above. Optionally, the step of adjusting an attribute of a target object includes: adjust a size of the target object according to the target triggering in a triggering process of the target triggering.

Optionally, the step of adjusting an attribute of a target object includes: display the first associated content information in a first display size corresponding to the target triggering in response to end of the target triggering. The first display size includes a display size of the first associated content information in response to end of the target triggering or a preset display size.

Optionally, the step of adjusting an attribute of a target object includes: display an adjustment control in response to end of the target triggering. The adjustment control is configured to trigger adjustment of a display size of the first associated content information.

Optionally, after the step of displaying an adjustment control, the method further includes: display an adjustment panel in response to a first triggering on the adjustment control, where at least two candidate display sizes are displayed in the adjustment panel; and display the first associated content information in a second display size of the at least two candidate display sizes in response to a size adjustment operation.

As shown in FIG. 5, the method for displaying information provided in the example may include the following steps.

S201. Display first associated content information of a first media content in an information display area of a media content display interface, where the first associated content information includes character content information.

S202. Receive a target triggering acting within the media content display interface.

S203. Adjust a size of a target object according to the target triggering in a triggering process of the target triggering, and execute S204 or S205, where the target object includes the first associated content information.

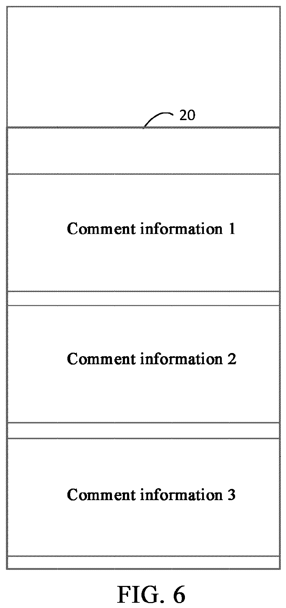

In the example, the display size of the first associated content information and/or the area size of the information display area 20 may be adjusted according to the target triggering in a triggering process of the target triggering, as shown in FIG. 6 (in the figure, the first associated content information is the comment information of the first media content). For example, when the target triggering is a slide operation/combo operation/long press operation, a zooming ratio of the first associated content information/information display area 20 may be determined according to a slide distance/the combo number/a long press duration of the target triggering, and the first associated content information/information display area 20 may be zoomed according to the zooming ratio, such that the display size of the first associated content information and/or the area size of the information display area 20 may be adjusted. Herein, the zooming ratios of the first associated content information and the information display area 20 may be the same or not. For example, the first associated content information and the information display area 20 may be zoomed according to a same zooming ratio.

When the target object is zoomed, a picture of the first media content displayed in the media content display interface may be zoomed or not, which may be set according to needs and is not limited in the example.

In the embodiment, the target triggering may include a target slide operation, such that the display size of the first associated content information and/or the area size of the information display area may be adjusted according to the slide distance of the target slide operation. For example, the zooming ratio of the first associated content information/information display area is determined according to the slide distance of the target slide operation, and the first associated content information and/or the information display area are/is zoomed according to the zooming ratio. In the case, optionally, the target triggering includes a target slide operation. The step of adjusting a size of the target object according to the target triggering includes: adjust the size of the target object according to a slide distance of the target slide operation. The target slide operation may include an operation of sliding in a preset direction, or a multi-finger slide operation. The multi-finger slide operation may include, for example, a multi-finger zoom-in operation and/or a multi-finger pinch operation.

S204. Display the first associated content information in a first display size corresponding to the target triggering in response to end of the target triggering, where the first display size includes a display size of the first associated content information in response to end of the target triggering or a preset display size.

The first display size may be a display size corresponding to the target triggering, such as a display size to which the target triggering instructs to adjust. The first display size may include the display size of the first associated content information in response to end of the target triggering, or the preset display size. The preset display size and the display size of the first associated content information before the target triggering is received may be different sizes. For example, the preset display size may be n font sizes larger or n font sizes smaller than the display size of the first associated content information before the target triggering is received. Specifically, n may be set flexibly according to needs, for example, n may be set to 0.5, 1 or 2.

Illustratively, in the triggering process of the target triggering, the display size of the first associated content information may be adjusted according to the target triggering. In response to end of the target triggering, the first associated content information of the first media content is displayed in the information display area according to the display size to which the first associated content information is adjusted in response to end of the target triggering. The first associated content information of the first media content may be displayed in the information display area according to the preset display size in response to end of the target triggering.

S205. Display an adjustment control in response to end of the target triggering, where the adjustment control is configured to trigger adjustment of the display size of the first associated content information.

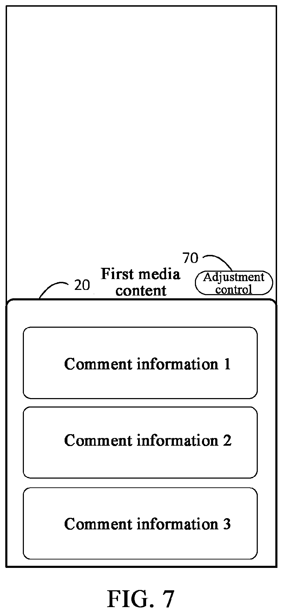

In the example, in response to end of the target triggering, the adjustment control 70 may be displayed, as shown in FIG. 7 (in the figure, the first associated content information is the comment information of the first media content), such that the user can adjust the display size of the first associated content information by triggering the adjustment control 70.

S206. Display an adjustment panel in response to a first triggering on the adjustment control, where at least two candidate display sizes are displayed in the adjustment panel.

The first triggering may be an operation for triggering the adjustment control.

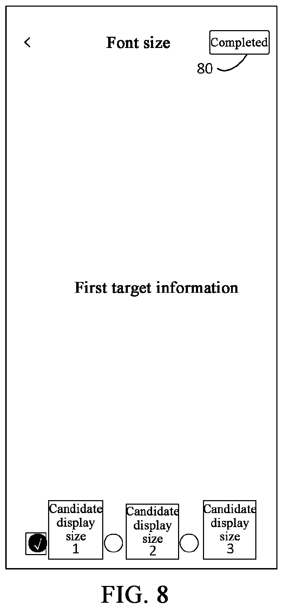

Illustratively, when the first triggering is received, for example, when it is detected that the user triggers the adjustment control 70 (as shown in FIG. 7), the adjustment panel may be displayed, and at least two candidate display size selectable by the user may be displayed in the adjustment panel, as shown in FIG. 8.

In an embodiment, the user can select a candidate display size to which the user is to adjust in the adjustment panel, such as trigger the candidate display size to which the user is to adjust. Correspondingly, when detecting that the user triggers the candidate display size displayed in the adjustment panel, the current application program may display the candidate display size in a selected state, and display other candidate display sizes displayed in the adjustment panel than the candidate display size in unselected states, such that the user is clear about the candidate display size currently selected. In this case, optionally, after the step of displaying an adjustment panel, the method further includes: display, in response to a second triggering on any candidate display size, the candidate display size triggered by the second triggering in a selected state, and display candidate display sizes other than the candidate display size triggered by the second triggering in unselected states. The second triggering may be an operation of triggering a candidate display size displayed in the adjustment panel.

With further reference to FIG. 8, the comment panel may further display first target information, such as one or more pieces of associated content information of the first media content or preset information. Therefore, when it is detected that the user triggers a candidate display size displayed in the adjustment panel, the first target information may be displayed in the candidate display size triggered by the user, such that the user can preview a display effect of the candidate display size triggered by the user. Herein, the adjustment panel may further display the first target information. The method for displaying information provided in the example may further include: display, in response to the second triggering on any candidate display size, the first target information in the candidate display size triggered by the second triggering. The first target information includes target first associated content information of the first media content or preset information. For example, the target first associated content information may include one or more pieces of first associated content information of the first media content. For example, when the first associated content information is comment information of the first media content, the target first associated content information may include one or more pieces of comment information of the first media content, for example, the first m (m is a positive integer) pieces of first comment information of the first media content, and may also include preset information. The preset information may be preset by a developer.

S207. Display the first associated content information in a second display size of the at least two candidate display sizes in response to a size adjustment operation.

The size adjustment operation may be an operation for instructing that the first associated content information is displayed in one candidate display size displayed in the adjustment panel, such as an operation for triggering a completion control displayed in the adjustment panel. The second display size may be a candidate display size to which the size adjustment operation instructs to adjust, for example, a candidate display size displayed at a preset position in the adjustment panel or a candidate display size in a selected state in the adjustment panel.

Illustratively, when the size adjustment operation is received, for example, when it is detected that the user triggers the completion control 80 in the adjustment panel (as shown in FIG. 8), a corresponding candidate display size in the adjustment panel may be taken as the second display size, and the first associated content information may be displayed in the second display size.

In an embodiment, the second display size may be the candidate display size in a selected state in the adjustment panel. Thus, when the size adjustment operation is received, the candidate display size in a selected state in the adjustment panel may be taken as the second display size, and the first associated content information may be displayed in the second display size. Herein, the step of displaying the first associated content information in a second display size of the at least two candidate display sizes may include: display the first associated content information in the second display size that is in a selected state.

In the example, when the size adjustment operation is received, the adjustment panel may be kept displayed until a triggering for closing the adjustment panel is received. Alternatively, display of the adjustment panel may be canceled, such that the user can view the first associated content information displayed in the second display size in the information display area. In this case, optionally, the step of displaying the first associated content information in a second display size of the at least two candidate display sizes includes: cancel display of the adjustment panel, and display the first associated content information in the second display size of the at least two candidate display sizes.

In the example, the size adjustment operation may be configured only to instruct adjustment of the display size of the first associated content information of the first media content, and not to instruct adjustment of a display size of associated content information of other media contents or other information to be displayed in the current application software.

The size adjustment operation may also be configured to instruct adjustment of the display size of the associated content information of the plurality of media contents (including the first media content and other media contents than the first media content) in the current application software, or to instruct adjustment of the display size of the plurality of pieces of information to be displayed (including the associated content information and other information to be displayed than the associated content information) in the current application software. In this case, optionally, the size adjustment operation is configured to instruct a display size of second target information and a display size of the first associated content information to be adjusted to the second display size. The second target information includes second associated content information of a second media content and/or other information to be displayed than the associated content information in current application software. Herein, the second media content may be other media content than the first media content. The second associated content information may be associated content information of the second media content. The other information to be displayed than the associated content information may be information to be displayed other than the associated content information of the media content, such as a conversation message in a conversation interface or friend information displayed in a friend list interface.

In the example, the information to be displayed configured to instruct the adjustment of the display size by the size adjustment operation may be set in advance by a developer, or may also be selected by the user. For example, when the size adjustment operation is received, an adjustment range display window may be displayed, such that the user may select an adjustment range corresponding to the size adjustment operation in the adjustment range display window. For example, the adjustment range is to adjust only the display size of the first associated content information of the first media content, to adjust the display size of the associated content information of the plurality of media contents, or adjust the display size of the plurality pieces of information to be displayed in the current application software.

In the example, when the first triggering on the adjustment control is received, the display size of the first associated content information may be directly adjusted without displaying the adjustment panel. For example, the display size of the first associated content information may be directly increased/decreased by n font sizes, etc., which may be set according to needs.

In an embodiment, the method for displaying information provided in the example may further include: display the first associated content information in a third display size in response to end of the target triggering. The third display size includes the display size of the first associated content information before the target triggering, the display size of the first associated content information in response to end of the target triggering, or the preset display size.

The third display size may be a size required to display the first associated content information in response to end of the target triggering, and may include the display size of the first associated content information before the target triggering, the display size of the first associated content information in response to end of the target triggering, or the preset display size.

In the above embodiment, in view of the situation that the adjustment control and/or the preset mode control are/is displayed in response to end of the target triggering, the display size (for example, the size of a character) of the first associated content information may be adjusted or not in the triggering process of the target triggering and in response to end of the target triggering, which may be set according to needs.

Illustratively, in the triggering process of the target triggering, the display size of the first associated content information may be adjusted. Thus, in response to end of the target triggering, the display size of the first associated content information may be restored to the display size of the first associated content information before the target triggering is received, as shown in FIGS. 3 and 7. The first associated content information may also be displayed in the information display area in the display size of the first associated content information in response to end of the target triggering, or displayed in the information display area in the preset display size.

In the triggering process of the target triggering, the display size of the first associated content information may not be adjusted. Thus, in response to end of the target triggering, the display size of the first associated content information may be displayed in the display size of the first associated content information before the target triggering is received (that is, the display size of the first associated content information in response to end of the target triggering), as shown in FIGS. 3 and 7. The first associated content information may also be displayed in the information display area in the preset display size.

In an embodiment, the method for displaying information provided in the example may further include: display the information display area in a target area size in response to end of the target triggering. The target area size includes an area size of the information display area before the target triggering, an area size of the information display area in response to end of the target triggering, or the preset area size.

The target area size may be a size (that is, area size) of the information display area displayed in response to the target triggering, and may be an original area size of the information display area before triggering the target triggering, an area size to which the information display area is zoomed in response to end of the target triggering, or the preset area size.

In the above embodiments, the area size of the information display area may be adjusted or not in the triggering process of the target triggering and in response to end of the target triggering, which may be set according to needs.

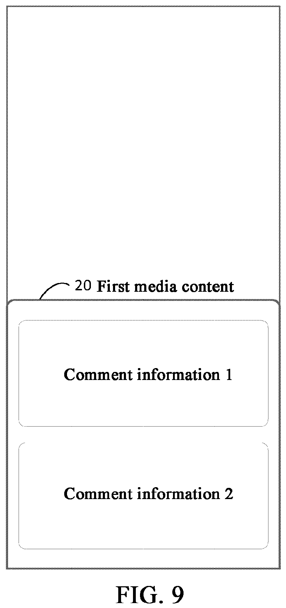

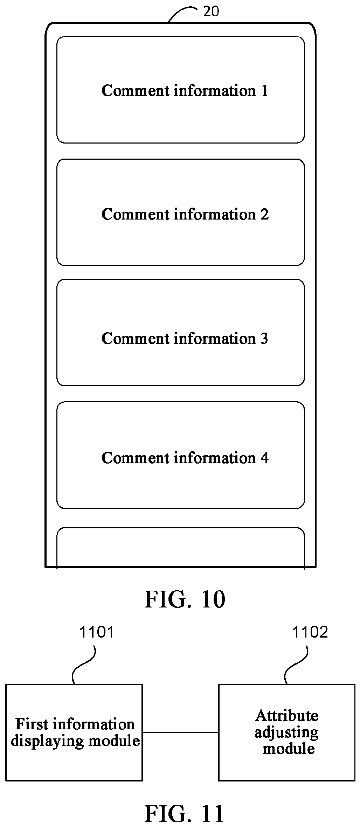

For example, the area size of the information display area 20 before the target triggering is received is smaller than the preset area size, the area size of the information display area 20 may be adjusted in the triggering process of the target triggering. Thus, in response to end of the target triggering, the area size of the information display area 20 may be restored to the area size of the information display area 20 before the target triggering is received, as shown in FIG. 9 (in the figure, the first associated content information is the comment information of the first media content). The information display area 20 may also be displayed in the area size to which the information display area 20 is zoomed in response to end of the target triggering, and alternatively, the information display area 20 may be displayed in the preset area size, as shown in FIG. 10 (in the figure, the first associated content information is the comment information of the first media content).

In the triggering process of the target triggering, the area size of the information display area 20 may not be adjusted. Therefore, in response to end of the target triggering, the area size of the information display area 20 may be displayed as the area size of the information display area 20 before the target triggering is received (that is, the area size of the information display area 20 in response to end of the target triggering), as shown in FIG. 9. The information display area 20 may also be displayed in the preset area size, as shown in FIG. 10.

In the method for displaying information provided in the example, the user can adjust a display size of the currently viewed associated content information in different ways, such that the requirements by the user for adjusting the display size of the associated content information can be satisfied, and the operation required for adjusting an attribute of the associated content information may be simplified.

FIG. 11 is a structural block diagram of an apparatus for displaying information according to an example of the disclosure. The apparatus may be implemented by software and/or hardware, may be configured in an electronic device, for example, may be configured in a mobile phone or tablet computer, and may adjust attributes of associated content information of a media content in a media content display interface by executing the method for displaying information. As shown in FIG. 11, the apparatus for displaying information provided in the example may include a first information displaying module 1101, and an attribute adjusting module 1102.

The first information displaying module 1101 is configured to display first associated content information of a first media content in an information display area of a media content display interface. The first associated content information includes character content information.

The attribute adjusting module 1102 is configured to adjust an attribute of a target object in response to a target triggering acting within the media content display interface. The target object includes the first associated content information.

The apparatus for displaying information provided in the example displays first associated content information of a first media content in an information display area of a media content display interface by means of the first information displaying module 1101, where the first associated content information includes character content information; and adjusts an attribute of a target object by means of the attribute adjusting module 1102 in response to a target triggering acting within the media content display interface, where the target object includes the first associated content information. In the example, by using the above technical solution, when the associated content information of the media content is displayed, the attribute of the associated content information is adjusted according to the target triggering of the user, such that the user can conveniently and quickly adjust the attribute of the associated content information when viewing the associated content information. Operation required for adjusting the attribute of the associated content information can be simplified, and user experience can be improved.

In the above solution, the target object may further include the information display area.

In the above solution, the attribute adjusting module 1102 may be configured to adjust a size of the target object according to the target triggering in a triggering process of the target triggering.

In the above solution, the target triggering may include a target slide operation. In the above solution, the attribute adjusting module 1102 may be configured to adjust the size of the target object according to a slide distance of the target slide operation.

In the above solution, the attribute adjusting module 1102 may be configured to display the first associated content information in a first display size corresponding to the target triggering in response to end of the target triggering. The first display size includes a display size of the first associated content information in response to end of the target triggering, or a preset display size.

In the above solution, the attribute adjusting module 1102 may be configured to display an adjustment control in response to end of the target triggering. The adjustment control is configured to trigger adjustment of a display size of the first associated content information.

Illustratively, the apparatus for displaying information provided in the example may further include: a panel displaying module configured to display, after the adjustment control is displayed, an adjustment panel in response to a first triggering on the adjustment control, where at least two candidate display sizes are displayed in the adjustment panel; and a first information adjusting module configured to display the first associated content information in a second display size of the at least two candidate display sizes in response to a size adjustment operation.

Illustratively, the apparatus for displaying information provided in the example may further include: a selection module configured to display, in response to a second triggering on any candidate display size, the candidate display size triggered by the second triggering in a selected state after the adjustment panel is displayed, and display candidate display sizes other than the candidate display size triggered by the second triggering in unselected states. The first information adjusting module may be configured to display the first associated content information in the second display size that is in a selected state.

In the above solution, the adjustment panel may further display first target information. The apparatus for displaying information provided in the example may further include: a second information adjusting module configured to display, in response to the second triggering on any candidate display size, the first target information in the candidate display size triggered by the second triggering. The first target information includes target first associated content information of the first media content or preset information.

In the above solution, the first information adjusting module may be configured to cancel display of the adjustment panel, and display the first associated content information in the second display size of the at least two candidate display sizes.

In the above solution, a size adjustment operation may be configured to instruct a display size of second target information and a display size of the first associated content information to be adjusted to the second display size. The second target information may include second associated content information of a second media content and/or other information to be displayed than the associated content information in current application software.

Illustratively, the apparatus for displaying information provided in the example may further include: a control displaying module configured to display a preset mode control in response to end of the target triggering. The preset mode control is configured to trigger setting of current application software to a preset display mode. Different display modes correspond to different display attributes of information to be displayed. The information to be displayed includes the first associated content information.

In the above solution, the display attributes may include at least one of a display size, a display color, and a display style.

In the above solution, the control displaying module may be configured to display the preset mode control when a number of times of the target triggering within a preset period reaches a preset number of times.

Illustratively, the apparatus for displaying information provided in the example may further include: a second information displaying module configured to display the first associated content information in a third display size in response to end of the target triggering. The third display size includes the display size of the first associated content information before the target triggering, the display size of the first associated content information in response to end of the target triggering, or the preset display size.

Illustratively, the apparatus for displaying information provided in the example may further include: an area displaying module configured to display the information display area in a target area size in response to end of the target triggering. The target area size includes an area size of the information display area before the target triggering, an area size of the information display area in response to end of the target triggering, or a preset area size.

In the above solution, the attribute adjusting module 1102 may be configured to adjust a color of the target object.

The apparatus for displaying information provided in the example of the disclosure can execute the method for displaying information provided in any example of the disclosure, and has corresponding functional modules and effects for executing the method for displaying information. For technical details not described in detail in the example, reference may be made to the methods for displaying information provided in all of the examples of the disclosure.

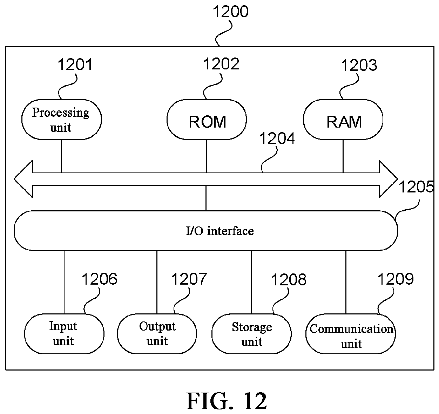

With reference to FIG. 12 below, a schematic structural diagram of an electronic device (for example, a terminal device) 1200 suitable for implementing an example of the present disclosure is shown. The terminal device in the example of the disclosure may include a mobile terminal such as a mobile phone, a notebook computer, a digital broadcast receiver, a personal digital assistant (PDA), a portable android device (PAD), a portable media player (PMP), an in-vehicle terminal (for example, an in-vehicle navigation terminal), etc., and a fixed terminal such as a digital television (TV), a desktop computer, etc. The electronic device illustrated in FIG. 12 is merely an instance and should not impose any limitation on the functions and scope of use of the examples of the present disclosure.

As shown in FIG. 12, the electronic device 1200 may include a processing unit (for example, a central processing unit, a graphics processing unit, etc.) 1201. The processing unit 1201 may execute a plurality of appropriate actions and processes according to programs stored in a read-only memory (ROM) 1202 or programs loaded from a storage unit 1208 into a random-access memory (RAM) 1203. The RAM 1203 also stores a plurality of programs and data needed for the operations of the electronic device 1200. The processing unit 1201, the ROM 1202, and the RAM 1203 are connected to each other by means of a bus 1204. An input/output (I/O) interface 1205 is also connected to the bus 1204.

The following apparatuses may be connected to the I/O interface 1205: an input unit 1206 including, for example, a touch screen, a touch pad, a keyboard, a mouse, a camera, a microphone, an accelerometer, a gyroscope, etc.; an output unit 1207 including, for example, a liquid crystal display (LCD), a speaker, a vibrator, etc.; a storage unit 1208 including, for example, a magnetic tape, a hard disk, etc.; and a communication unit 1209. The communication unit 1209 may allow the electronic device 1200 to be in wireless or wired communication with other devices to exchange data. While the FIG. 12 illustrates an electronic device 1200 having a plurality of apparatuses, not all of the illustrated apparatuses are required to be implemented or provided. More or fewer apparatuses may alternatively be implemented or provided.

According to examples of the disclosure, a processes described above with reference to the flowcharts may be implemented as a computer software program. For example, examples of the disclosure include a computer program product. The computer program product includes a computer program carried on a non-transitory computer-readable medium, and the computer program includes a program code for executing the method illustrated in the flowchart. In such examples, the computer program may be downloaded and installed from a network by means of the communication unites 1209, or installed from the storage unit 1208, or installed from the ROM 1202. When executed by the processing unit 1201, the computer program executes the above-described functions defined in the method of the example of the disclosure.

The computer-readable medium in the disclosure may be a computer-readable signal medium or a computer-readable storage medium, or any combination of a computer-readable signal medium and a computer-readable storage medium. The computer-readable storage medium may include an electronic, magnetic, optical, electromagnetic, infrared, or semiconductor system, apparatus, or device, or any combination of the foregoing. The computer-readable storage medium may include an electrical connection based on one or more wires, a portable computer diskette, a hard disk, an RAM, an ROM, an erasable programmable read-only memory (EPROM), a flash memory, an optical fiber, a portable compact disc read-only memory (CD-ROM), an optical storage device, a magnetic storage device, or any suitable combination of the foregoing. In the disclosure, the computer-readable storage medium may be any tangible medium that includes or stores a program for use by or in conjunction with an instruction execution system, apparatus, or device. In the disclosure, the compute-readable signal medium may include a data signal propagating in a baseband or as part of a carry wave and carrying a computer-readable program code. Such a propagated data signal may have a variety of forms and may include an electromagnetic signal, an optical signal, or any suitable combination of the foregoing. The computer-readable signal medium may also be any computer-readable medium besides a computer-readable storage medium. The computer-readable signal medium can transmit, propagate, or transfer a program for use by or in conjunction with an instruction execution system, apparatus, or device. A program code included on a computer-readable medium may be transmitted by means of any suitable medium, including wires, fiber optic cables, radio frequency (RF), etc., or any suitable combination of the foregoing.

In some embodiments, a client side and a server may communicate by using any currently known or future developed network protocol, such as a hypertext transfer protocol (HTTP), and may be interconnected with any form or medium of digital data communication (for example, a communication network). Instances of communication networks include a local area network (LAN), a wide area network (WAN), Internet work (for example, the Internet), and an end-to-end network (for example, an ad hoc end-to-end network), as well as any currently-known or future-developed network.

The computer-readable medium may be included in the above electronic device, and may also exist independently without being assembled into the electronic device.

The computer-readable medium carries one or more programs. When executed by the electronic device, the one or more programs cause the electronic device to: display first associated content information of a first media content in an information display area of a media content display interface, where the first associated content information includes character content information; and adjust an attribute of a target object in response to a target triggering acting within the media content display interface, where the target object includes the first associated content information.

A computer program code for performing operations of the disclosure may be written in one or more programming languages, or combinations of the programming languages. The programming languages include target-oriented programming languages, such as Java, Smalltalk, and C++, and further include conventional procedural programming languages, such as the C programming language or similar programming languages. The program code may be executed entirely on a user computer, partly on a user computer, as a stand-alone software package, partly on a user computer and partly on a remote computer, or entirely on a remote computer or server. In the case involving a remote computer, the remote computer may be connected to a user computer through any kind of network, including an LAN or a WAN, or may be connected to an external computer (for example, connected through the Internet by using an Internet service provider).

The flowcharts and block diagrams in the accompanying drawings illustrate the architecture, functionality, and operations possibly implemented by the systems, methods, and computer program products according to the plurality of examples of the disclosure. In this regard, each block in the flowcharts or block diagrams may represent a module, a program segment, or part of a code, and a module, a program segment, or part of a code includes one or more executable instructions for implementing a specified logical function. In some alternative implementations, a function noted in a block may occur in a different order than an order noted in the figures. For example, two consecutive blocks may actually be executed substantially in parallel, or in a reverse order sometimes, depending on a function involved. Each block in the block diagrams and/or flowcharts, and combinations of blocks in the block diagrams and/or flowcharts, may be implemented by special-purpose hardware-based systems that perform specified functions or operations, or may be implemented by combinations of special-purpose hardware and computer instructions.

The units described in the example of the disclosure may be implemented in software or hardware. The name of a module does not constitute a qualification of the unit itself under a circumstance.

The functions described above herein may be executed at least partially by one or more hardware logic components. For example, exemplary types of hardware logic components that may be used include field programmable gate arrays (FPGAs), application specific integrated circuits (ASICs), application specific standard parts (ASSPs), systems on chip (SOCs), complex programmable logic devices (CPLDs), etc.

In the context of the disclosure, the machine-readable medium may be a tangible medium that may include or store a program for use by or in conjunction with an instruction execution system, apparatus, or device. The machine-readable medium may be a machine-readable signal medium or a machine-readable storage medium. The machine-readable medium may include an electronic, magnetic, optical, electromagnetic, infrared, or semiconductor system, apparatus, or device, or any suitable combination of the foregoing. The machine-readable storage medium may include an electrical connection based on one or more wires, a portable computer diskette, a hard disk, an RAM, an ROM, an EPROM, a flash memory, an optical fiber, a portable CD-ROM, an optical storage device, a magnetic storage device, or any suitable combination of the foregoing. The storage medium may be a non-transitory storage medium.

According to one or more examples of the disclosure, Instance 1 provides a method for displaying information. The method includes:
display first associated content information of a first media content in an information display area of a media content display interface, where the first associated content information includes character content information; and
adjust an attribute of a target object in response to a target triggering acting within the media content display interface, where the target object includes the first associated content information.

According to one or more examples of the disclosure, based on the method of Instance 1, in Instance 2, the target object further includes the information display area.

According to one or more examples of the disclosure, based on the method of Instance 1, in Instance 3, the step of adjusting an attribute of a target object includes:
adjust a size of the target object according to the target triggering in a triggering process of the target triggering.

According to one or more examples of the disclosure, based on the method of Instance 3, in Instance 4, the target triggering includes a target slide operation, and the step of adjusting a size of the target object according to the target triggering includes:
adjust the size of the target object according to a slide distance of the target slide operation.

According to one or more examples of the disclosure, based on the method of Instance 1, in Instance 5, the step of adjusting an attribute of a target object includes:
display the first associated content information in a first display size corresponding to the target triggering in response to end of the target triggering. The first display size includes a display size of the first associated content information in response to end of the target triggering or a preset display size.

According to one or more examples of the disclosure, based on the method of Instance 1, in Instance 6, the step of adjusting an attribute of a target object includes:
display an adjustment control in response to end of the target triggering. The adjustment control is configured to trigger adjustment of a display size of the first associated content information.

According to one or more examples of the disclosure, based on the method of Instance 6, in Instance 7, after the step of displaying an adjustment control, the method further includes:
display an adjustment panel in response to a first triggering on the adjustment control, where at least two candidate display sizes are displayed in the adjustment panel; and
display the first associated content information in a second display size of the at least two candidate display sizes in response to a size adjustment operation.

According to one or more examples of the disclosure, based on the method of Instance 7, in Instance 8, after the step of displaying an adjustment panel, the method further includes:
display, in response to a second triggering on any candidate display size, the candidate display size triggered by the second triggering in a selected state, and display candidate display sizes other than the candidate display size triggered by the second triggering in unselected states; and
the step of displaying the first associated content information in a second display size of the at least two candidate display sizes includes:
   display the first associated content information in the second display size that is in a selected state.

According to one or more examples of the disclosure, based on the method of Instance 8, in Instance 9, the adjustment panel further displays first target information, and the method further includes:
display, in response to the second triggering on any candidate display size, the first target information in the candidate display size triggered by the second triggering. The first target information includes target first associated content information of the first media content or preset information.

According to one or more examples of the disclosure, based on the method of Instance 7, in Instance 10, the step of displaying the first associated content information in a second display size of the at least two candidate display sizes includes:
cancel display of the adjustment panel, and display the first associated content information in the second display size of the at least two candidate display sizes.

According to one or more examples of the disclosure, based on the method of Instance 7, in Instance 11, a size adjustment operation is configured to instruct a display size of second target information and a display size of the first associated content information to be adjusted to the second display size. The second target information includes second associated content information of a second media content and/or other information to be displayed than the associated content information in current application software.

According to one or more examples of the disclosure, based on the method of Instance 1, in Instance 12, the method further includes:
display a preset mode control in response to end of the target triggering. The preset mode control is configured to trigger setting of current application software to a preset display mode. Different display modes correspond to different display attributes of information to be displayed. The information to be displayed includes the first associated content information.

According to one or more examples of the disclosure, based on the method of Instance 12, in Instance 13, the display attributes include at least one of a display size, a display color, and a display style.

According to one or more examples of the disclosure, based on the method of Instance 12, in Instance 14, the step of displaying a preset mode control includes:
display the preset mode control when a number of times of the target triggering within a preset period reaches a preset number of times.

According to one or more examples of the disclosure, based on the method of any of Instances 6-14, in Instance 15, the method further includes:
display the first associated content information in a third display size in response to end of the target triggering. The third display size includes the display size of the first associated content information before the target triggering, the display size of the first associated content information in response to end of the target triggering, or the preset display size.

According to one or more examples of the disclosure, based on the method of any of Instances 1-14, in Instance 16, the method further includes:
display the information display area in a target area size in response to end of the target triggering. The target area size includes an area size of the information display area before the target triggering, an area size of the information display area in response to end of the target triggering, or a preset area size.

According to one or more examples of the disclosure, based on the method of any of Instances 1-14, in Instance 17, the step of adjusting an attribute of a target object includes:
adjust a color of the target object.

According to one or more examples of the disclosure, Instance 18 provides an apparatus for displaying information. The apparatus includes:
a first information displaying module configured to display first associated content information of a first media content in an information display area of a media content display interface, where the first associated content information includes character content information; and
an attribute adjusting module configured to adjust an attribute of a target object in response to a target triggering acting within the media content display interface, where the target object includes the first associated content information.

According to one or more examples of the disclosure, Instance 19 provides an electronic device. The electronic device includes:
one or more processors; and
a memory configured to store one or more programs, where
when executed by the one or more processors, the one or more programs cause the one or more processors to implement the method for displaying information of any of Instances 1-17.

According to one or more examples of the disclosure, Instance 20 provides a computer-readable storage medium, storing a computer program. The computer program implements the method for computer information of any of Instances 1-17 when executed by a processor.

Furthermore, although a plurality of operations are depicted in a particular order, this should not be understood as requiring that such operations be executed in the particular order shown or in a sequential order. In certain circumstances, multitasking and parallel processing may be advantageous. Similarly, although a plurality of implementation details are included in the above discussion, these details should not be construed as limitations on the scope of the disclosure. Some features that are described in the context of separate examples may also be implemented in combination in a single example. Conversely, a plurality of features described in the context of a single example may also be implemented in multiple examples separately or in any suitable sub-combination manner.

Although the subject matter has been described in language specific to structural features and/or methodological logical actions, it should be understood that the subject matter defined in the appended claims is not necessarily limited to the specific features or actions described above. On the contrary, the specific features and actions described above are merely instance forms of implementing the claims.

## Claims

1. A method for displaying information, comprising:
displaying first associated content information of a first media content in an information display area of a media content display interface, wherein the first associated content information comprises character content information; and
adjusting an attribute of a target object in response to a target triggering acting within the media content display interface, wherein the target object comprises the first associated content information.

2. The method of claim 1, wherein the target object further comprises the information display area.

3. The method of claim 1, wherein adjusting the attribute of the target object comprises:
adjusting, in a triggering process of the target triggering, a size of the target object based on the target triggering.

4. The method of claim 3, wherein the target triggering comprises a target slide operation, and adjusting the size of the target object based on the target triggering comprises:
adjusting the size of the target object based on a slide distance of the target slide operation.

5. The method of claim 1, wherein adjusting the attribute of the target object comprises:
displaying the first associated content information in a first display size corresponding to the target triggering in response to end of the target triggering, wherein the first display size comprises a display size of the first associated content information in response to end of the target triggering, or a preset display size.

6. The method of claim 1, wherein adjusting the attribute of the target object comprises:
displaying an adjustment control in response to end of the target triggering, wherein the adjustment control is configured to trigger adjustment of a display size of the first associated content information.

7. The method of claim 6, wherein after displaying the adjustment control, the method further comprises:
displaying an adjustment panel in response to a first triggering on the adjustment control, wherein at least two candidate display sizes are displayed in the adjustment panel; and
displaying the first associated content information in a second display size of the at least two candidate display sizes in response to a size adjustment operation.

8. The method of claim 7, wherein after displaying the adjustment panel, the method further comprises:
displaying, in response to a second triggering on any candidate display size, the candidate display size triggered by the second triggering in a selected state, and displaying candidate display sizes other than the candidate display size triggered by the second triggering in unselected states; and
the displaying the first associated content information in a second display size of the at least two candidate display sizes comprises:
displaying the first associated content information in the second display size that is in a selected state.

9. The method of claim 8, wherein the adjustment panel further displays first target information, and the method further comprises:
displaying, in response to the second triggering on any candidate display size, the first target information in the candidate display size triggered by the second triggering, wherein the first target information comprises target first associated content information of the first media content or preset information.

10. The method of claim 7, wherein displaying the first associated content information in the second display size of the at least two candidate display sizes comprises:
canceling display of the adjustment panel, and displaying the first associated content information in the second display size of the at least two candidate display sizes.

11. The method of claim 7, wherein a size adjustment operation is configured to instruct a display size of second target information and a display size of the first associated content information to be adjusted to the second display size, wherein the second target information comprises at least one of second associated content information of a second media content, or other information to be displayed than the associated content information in current application software.

12. The method of claim 1, further comprising:
displaying a preset mode control in response to end of the target triggering, wherein the preset mode control is configured to trigger setting of current application software to a preset display mode, different display modes correspond to different display attributes of information to be displayed, and the information to be displayed comprises the first associated content information.

13. The method of claim 12, wherein the display attributes comprise at least one of a display size, a display color, and a display style.

14. The method of claim 12, wherein displaying the preset mode control comprises:
displaying the preset mode control in response to end of a number of times of the target triggering within a preset period reaches a preset number of times.

15. The method of claim 6, further comprising:
displaying the first associated content information in a third display size in response to end of the target triggering, wherein the third display size comprises the display size of the first associated content information before the target triggering, the display size of the first associated content information in response to end of the target triggering, or the preset display size.

16. The method of claim 1, further comprising:
displaying the information display area in a target area size in response to end of the target triggering, wherein the target area size comprises an area size of the information display area before the target triggering, an area size of the information display area in response to end of the target triggering, or a preset area size.

17. The method of claim 1, wherein the adjusting an attribute of a target object comprises:
adjusting a color of the target object.

18. An apparatus for displaying information, comprising:
a first information display module configured to display first associated content information of a first media content in an information display area of a media content display interface, wherein the first associated content information comprises character content information; and
an attribute adjustment module configured to adjust an attribute of a target object in response to a target triggering acting within the media content display interface, wherein the target object comprises the first associated content information.

19. An electronic device, comprising:
at least one processor; and
a memory communicatively connected to the at least one processor;
wherein the memory stores a computer program executable by the at least one processor, and the computer program is executed by the at least one processor to cause the at least one processor to perform the method for displaying information of any of claims 1-17.

20. A computer-readable storage medium, wherein the computer-readable storage medium stores a computer instruction for implement the method for displaying information of any of claims 1-17 when executed by a processor.
